(19) Europäisches Patentamt
European Patent Office
Office européen des brevets

(11) Veröffentlichungsnummer: **0 000 337**
**A1**

(12) # EUROPÄISCHE PATENTANMELDUNG

(21) Anmeldenummer: **78100185.4**

(22) Anmeldetag: **19.06.78**

(51) Int. Cl.[2]: **C02B5/06**, C23F11/16

(30) Priorität: **07.07.77 DE 2730645**

(43) Veröffentlichungstag der Anmeldung: **24.01.79 Patentblatt 79/2**

(84) Benannte Vertragsstaaten: **BE FR GB NL**

(71) Anmelder: **Henkel Kommanditgesellschaft auf Aktien, Postfach 1100, D-4000 Düsseldorf 13 (DE)**

(72) Erfinder: **Wegemund, Bernd, Dr., Händelweg 3, D-5657 Haan (DE)**
**Wehle, Volker,Dr., Beethovenstrasse 57, D-4010 Hilden (DE)**
**Reiffert, Jürgen, Antwerpener Strasse 42, D-4200 Oberhausen (DE)**

(54) **Verwendung von Telomerisaten aus Mercaptanen mit Acrylverbindungen als Steinschutz- und/oder Korrosionsschutzmittel.**

(57) Verwendung von Telomerisaten aus Mercaptangruppen aufweisenden Telogenen und Acrylverbindungen als Steinschutz- und/oder Korrosionsschutzmittel.

Telomerisate der allgemeinen Formel

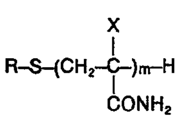

oder

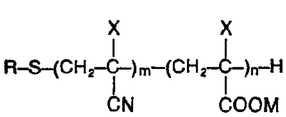

in der R einen gegebenenfalls eine oder mehrere Carboxylgruppen und/oder Hydroxylgruppen enthaltenden aliphatischen Rest mit 2 bis 22 Kohlenstoffatomen darstellt und X = H oder Methyl und M ein Alkalimetallion und n und m ganze Zahlen sind, in solcher Grössenordnung, dass die Telomerisate ein durchschnittliches Molekulargewicht zwischen 300 und 3000, insbesondere 700 bis 2000, haben, und wobei die Nitrilgruppe auch teilweise zur Amidgruppe verseift sein kann, als Steinschutz- und/oder Korrosionsschutzmittel in technischen Brauchwassersystemen anstelle von phosphorhaltigen Substanzen in einer Menge von 0,1 bis 100, insbesondere 1 bis 30 ppm, bezogen auf das Brauchwasser.

Düsseldorf, den 13. Juni 1978
Henkelstraße 67

HENKEL KGaA
ZR-FE/Patente
Dr.SchOe/Bk

Patentanmeldung

D 5566

# Verwendung von Telomerisaten aus Mercaptanen mit Acrylverbindungen als Steinschutz- und/oder Korrosionsschutzmittel

Der Betrieb technischer Brauchwassersysteme ist im allgemeinen ohne die Verwendung von Korrosionsschutzmitteln und Härtestabilisatoren nicht möglich. Die klassischen Mittel für diesen Anwendungszweck sind phosphorhaltige Substanzen, wie z.B. Polyphosphate oder Phosphonsäuren.

Die zunehmende Bedeutung ökologischer Probleme in der allgemeinen Technik läßt die Forderung nach phosphatfreien Korrosions- und Steinschutzmitteln von zunehmender Bedeutung werden. Unter diesem Gesichtspunkt sind in jüngster Zeit eine Reihe von phosphatfreien organischen Polymeren zur Verwendung als Härtestabilisatoren in Brauchwassersystemen beschrieben worden, wie z.B.: Mischpolymerisate von Maleinsäure oder auch deren Homopolymerisate sowie Homo- und Mischpolymerisate von (Meth)-acrylsäure und Oxyacrylsäure. Alle diese Verbindungen

werden in unterstöchiometrischen Mengen eingesetzt, wobei die Effektivität der genannten Substanzen weitaus geringer ist als die der klassischen phosphorhaltigen Verbindungen.

Aufgabe der vorliegenden Erfindung war es daher, wirksamere Mittel der genannten Art zu finden, die keine phosphorhaltigen Verbindungen sind und somit von erheblichem technischem Interesse sind.

Diese Aufgabe wird erfindungsgemäß durch Verwendung von Telomerisaten aus Mercaptangruppen aufweisenden Telogenen und Acrylverbindungen als Steinschutz- und/oder Korrosionsschutzmittel in technischen Brauchwassersystemen gelöst. Günstig hat sich die Verwendung von solchen Telomerisaten erwiesen, die ein durchschnittliches Molekulargewicht zwischen 300 und 3000, insbesondere 700 bis 2000, aufweisen. Zweckmäßig werden sie in Mengen von 0,1 bis 100, insbesondere 1 bis 30 ppm, bezogen auf das Brauchwasser eingesetzt.

Die erfindungsgemäß zu verwendenden Telomerisate können demnach der allgemeinen Formel

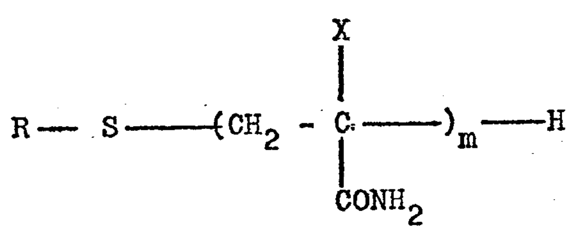

oder

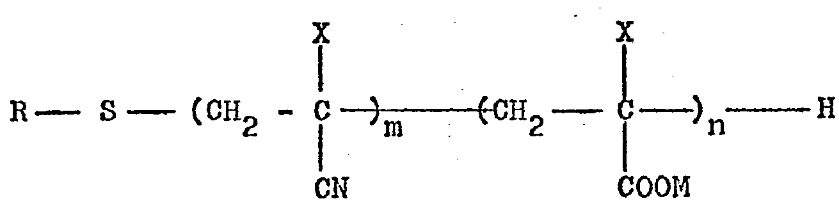

entsprechen und R einen gegebenenfalls eine oder mehrere Carboxylgruppen und/oder Hydroxylgruppen enthaltenden aliphatischen Rest mit 2 bis 22 Kohlenstoffatomen darstellen und X = H oder Methyl und M ein Alkalimetallion und n und m ganze Zahlen sind in einer Größenordnung, so daß die vorstehenden Randbedingungen gemäß des Molekulargewichts erfüllt werden, und wobei die Nitrilgruppe auch teilweise zur Amidgruppe verseift sein kann. Als Alkalimetallion kommen natürlich in erster Linie Natrium und Kalium in Betracht. Natürlich können diese auch ganz oder teilweise durch gegebenenfalls substituiertes Ammoniumion ersetzt sein.

Die Herstellung der erfindungsgemäß einzusetzenden Telomerisate kann nach bekannten Verfahren erfolgen (z. B. vergl. US-PS 3 498 942). Danach wird die Umsetzung von Alkylmercaptan, Acrylnitril und Acrylsäure in wasserfreiem Medium, wie z.B. in niedermolekularen aliphatischen Alkoholen, wie Methanol, Äthanol oder Propanol durchgeführt. Die Reaktionstemperatur kann innerhalb weiter Grenzen etwa zwischen 20 bis etwa 100° C variiert werden, liegt im allgemeinen aber zwischen 20 bis 70° C. Die Umsetzung erfolgt in Gegenwart eines üblichen Radikalinitiators, wie z.B. Ammonium, Alkali und/oder Erdalkalipersulfat, Laurylperoxid, Cyclohexylperoxid oder t-Butylperoxid. Zur Aufarbeitung des Reaktionsproduktes wird das Lösungsmittel im Vakuum abdestilliert, nachdem gegebenenfalls zuvor mit einer wäßrigen Base, wie z.B. Natrium- oder Kaliumhydroxid die vorhandene Säure bzw. die Carboxylgruppen neutralisiert bzw. teilweise neutralisiert wurden. Das so gewonnene Telomerisat ist meist ohne weitere Reinigung für die Verwendung als Stein- und Korrosionsinhibitor geeignet.

Als Ausgangsmaterialien für die Herstellung der erfindungsgemäß einzusetzenden Cotelomeren können demnach

/4

Alkylmercaptane mit vorzugsweise einer geradkettigen primären, verzweigtkettigen primären, sekundären oder tertiären Alkylgruppe mit 8 bis 18 Kohlenstoffatomen, wie z.B. n-Octylmercaptan, n-Decylmercaptan, t-Dodecylmercaptan, Hexadecylmercaptan, Octadecylmercaptan dienen. Als ungesättigte Monomere kommen insbesondere Acrylsäure und Methacrylsäure sowie die entsprechenden Amide und auch Acrylnitril und Methacrylnitril infrage.

Unter den erfindungsgemäßen Acrylamid-Telomerisaten sind Verbindungen der allgemeinen Formel

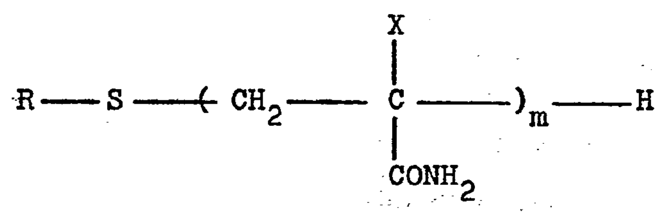

zu verstehen, in der R einen aliphatischen Kohlenwasserstoffrest mit 8 bis 18 Kohlenstoffatomen, X Wasserstoff oder eine Methylgruppe und m Zahlen von ungefähr 6 bis 20 darstellen.

Die Telomerisation der nichtionischen, d.h. Amid- und gegebenenfalls Nitrilgruppen enthaltenden Polymeren erfolgt wie bereits vorher erläutert. In diesem Fall erfolgt die Aufarbeitung des Reaktionsansatzes zweckmäßig durch Ausfällen mit Lösungsmitteln, wie etwa niederen Kohlenwasserstoffen oder insbesondere Diäthyläther. Auf diese Weise kann auch durch sogn. Umfällen eine Reinigung durchgeführt werden. Im allgemeinen ist dies jedoch nicht erforderlich.

Obgleich Verbindungen der erfindungsgemäß zu verwendenden Art als Komplexbildner an sich in Betracht gezogen werden könnten, ist ihre Verwendung nicht naheliegend. So ist dem Fachmann durchaus bekannt, daß die Komplexbildungsfähigkeit einer Verbindung kein Maßstab ist für eine Eignung als Steinschutzmittel (Härtestabilisator) oder etwa Korrosionsinhibitor in Brauchwassersystemen. Der hervorragende und überaus bekannte Komplexbildner (EDTA = Natriumsalz der Äthylendiamintetraessigsäure) z.B. ist als Steinschutzmittel (Härtestabilisator) in Brauchwassersystemen absolut ungeeignet.

Herstellung der erfindungsgemäß zu verwendenden Telomerisate

I) Cotelomerisate von Acrylsäure und Acrylnitril an Thioglykolsäure

64,8 g Acrylsäure (0,9 Mol) und 31,8 g Acrylnitril (0,6 Mol) wurden mit 226 g des. Wasser (35 %ige Monomer-Lösung) in einem 1-l-Dreihalskolben unter Rühren auf 60° C erwärmt. 16,2 g Thioglykolsäure (0,15 Mol) wurden schnell zugegeben und 2,8 g Ammoniumperoxodisulfat, gelöst in 8 ml Wasser innerhalb von 4 Minuten zugetropft. Das Reaktionsgemisch erwärmte sich trotz Eiskühlung auf etwa 90° C. Nachdem die Reaktion abgeklungen war, wurde noch 1 Stunde unter Rückfluß gekocht. Die Lösung wurde am Rotavapor eingeengt, mit wäßrigem Äthanol in der Wärme gelöst und in Äther ausgefällt. Ca. 90 % des Telomeren wurden in Wasser dispergiert, mit verdünnter Natronlauge bis pH 10 neutralisiert, in Äthanol gefällt und im Vakuumtrockenschrank bis zur Gewichtskonstanz getrocknet.

II) Telomerisate aus Alkylmercaptanen und (Meth)acrylamid

568 g Acrylamid (8 Mol) und 202 g n-Dodecylmercaptan (1 Mol) wurden mit 400 ml Methanol in einem 4-Liter-Dreihalskolben vorgelegt und unter Rühren auf 50° C erwärmt. 3,8 g Ammoniumperoxiddisulfat (0,5 % bezogen auf Monomere) wurden in 500 ml Methanol gelöst und die Lösung wurde im Verlauf von 7 Stunden dem Reaktionsgemisch zugetropft, wobei die Temperatur durch Kühlung unter 50° C gehalten wurde. Nach beendeter Reaktion wurde noch 1 Stunde unter Rückfluß gekocht. Um die zum Teil noch in Lösung befindlichen Telomeren zu gewinnen, wurden 2,5 Liter Äther als Fällungsmittel zugegeben und der gebildete Niederschlag abfiltriert. Der Niederschlag wurde mit Aceton gewaschen, filtriert und im

/7

Vakuumtrockenschrank bis zur Gewichtskonstanz getrocknet.

Die Ausbeute an Telomeren betrug 609 g (entsprechend 79 % der Theorie). Der Schwefelgehalt des Produktes betrug 4,15 % und die Verteilung der Monomerenanteile in Molen im Telomeren war 1 Mol n-Dodecylmercaptan : 8,6 Mol Acrylamid (Produkt A).

In entsprechender Weise wurden die nachfolgenden Produkte hergestellt:

B) 1 Mol-n-Octylmercaptan : 8,2 Mol Acrylamid % S4,39
C) 1 Mol-t-Dodecylmercaptan:14,0 Mol Acrylamid % S2,67

## Erfindungsgemäße Anwendung der Polyacryltelomerisate

### Beispiel 1

Zur Prüfung als Steinschutzmittel bzw. Härtestabilisator wurde nach folgender Versuchsanordnung gearbeitet:

Das Prüfwasser mit der darin enthaltenen erfindungsgemäßen Substanz wird mittels einer Schlauchpumpe durch einen Wärmetauscher gefördert. Die sich an der Wand des Wärmetauschers abscheidende Härte wird in verdünnter Salzsäure abgelöst und CaO in dieser Lösung titrimetrisch bestimmt. Es wird die Relation zu einem Blindwert ohne Dosierung angegeben:

Steinschutz in % = 100 - % Ablagerung, wobei sich die Prozentsatzablagerung berechnet nach

$$\frac{\text{Probe} \cdot 100\ (\text{mg CaO/l})}{\text{Blindwert}\ (\text{mg CaO/l})}$$

Im übrigen wurden die folgenden Bedingungen eingehalten:

Das Testwasser hatte folgende deutsche Härtegrade:

$30^{o}$ Calciumhärte (als $CaCl_2$)
$56^{o}$ Carbonathärte (als $NaHCO_3$)
$10^{o}$ Magnesiahärte (als $MgSO_4$)

| | |
|---|---|
| Thermostat-Temperatur: | $80^{o}$ C |
| Temperatur des auslaufenden Wassers: | $70^{o}$ C |
| Durchlaufgeschwindigkeit: | 0,5 l/h |
| Durchlaufvolumen: | 1000 ml |
| Dosierung der Steinschutzmittel: | 3 ppm |

In der nachfolgenden Tabelle 1 sind die gefundenen Werte für die Substanz A in Vergleich mit dem sogenannten Nullwert wiedergegeben.

Tabelle 1

| Substanz | % Steinschutz |
|---|---|
| Blindwert | 0 |
| Produkt nach I | 62 |

Beispiel 2

Die Bestimmung des Korrosionsverhaltens wird nach der Couponmethode durchgeführt. Dazu wird nach einer bestimmten Versuchsdauer aufgrund des Korrosionsprozesses in Lösung gegangenes Eisen bestimmt und in Relation zu einem Blindwert ohne Zusatz der erfindungsgemäß einzusetzenden Produkte angegeben.

In der später folgenden Tabelle 2 ist der Korrosionsschutz in % angegeben, der berechnet wird

Korrosionsschutz in % = 100 - % Eisengehalt.

Der prozentuale Eisengehalt wird berechnet nach:

$$\frac{\text{Probe} \cdot 100 \text{ (mg Fe/l)}}{\text{Blindwert (mg Fe/l)}}$$

Im übrigen wurden folgende Bedingungen eingehalten:

Coupons: Feinblechstahl St 37, gesandstrahlt mit Hartgußkies 0,1 - 0,2 mm
Couponfläche 17,1 $cm^2$

Beize der Coupons: 200 $cm^3$ Wasser (entmineralisiert)
250 $cm^3$ H Cl konz.
50 $cm^3$ H $NO_3$ konz.

Testwasser: $8^o$ d.H (als $CaCl_2$)
$2^o$ d.H (als $MgSO_4$)
$1^o$ d.H(Carbonathärte als $NaHCO_3$)
500 ppm Chloridionen

pH während des Versuches: 6,5 bis 8,2

Versuchstemperatur: $20^o$ C

Versuchsdauer: 3 h

Rührgeschwindigkeit: 100 UpM

In der nachfolgenden Tabelle 2 sind in Abhängigkeit von den Acryltelomerisaten nach II die Korrosionsschutzwirkungen in % angegeben.

Tabelle 2

| Substanz | Korrosionsschutz |
|---|---|
| Blindwert | 0 |
| Produkt II A | 41 |
| Produkt II B | 44 |
| Produkt II C | 38 |

Beispiel 3

Ein technisches Kühlsystem mit einem Inhalt von 1,2 $m^3$ und einer Umwälzung von 8 $m^3$/Std. wird mit Düsseldorfer Stadtwasser betrieben. Die wesentlichen Analysendaten waren: Gesamthärte 16° d.H, davon Carbonathärte 8,5° d.H bei einem pH-Wert von 7,4 und einem Chloridgehalt von 165 mg/l. Die Entwicklung ist ca. 2fach. Ohne jede Korrosionsschutzbildung des Kreislaufwassers stellt sich im System eine elektrochemisch gemessene Korrosionsrate von 0,18 mm/a ein. Aufgrund von Härteablagerungen verringert sich der Wärmeübergang am Wärmetauscher von $\Delta t$ = 8° C auf ein $\Delta t$ von 4° C innerhalb von 4 Wochen.

Nach Zugabe des Produktes II A in Höhe von 30 ppm stellte sich eine Korrosionsrate von 0,075 mm/a ein. Der Wärmeübergang zeigte während der Versuchsdauer von 4 Wochen keinen Abfall.

Patentansprüche:

1. Verwendung von Telomerisaten aus Mercaptangruppen aufweisenden Telogenen und Acrylverbindungen als Steinschutz- und/oder Korrosionsschutzmittel in technischen Brauchwassersystemen.

2. Verwendung von Telomerisaten eines durchschnittlichen Molekulargewichts zwischen 300 bis 3000, insbesondere 700 bis 2000, gemäß Anspruch 1.

3. Verwendung von Telomerisaten gemäß Anspruch 1 und 2 in einer Menge von 0,1 bis 100, insbesondere 1 bis 30 ppm bezogen auf eingesetztes Brauchwasser.

4. Verwendung von Telomerisaten gemäß Anspruch 1 bis 3, wobei das Telomerisat der allgemeinen Formel

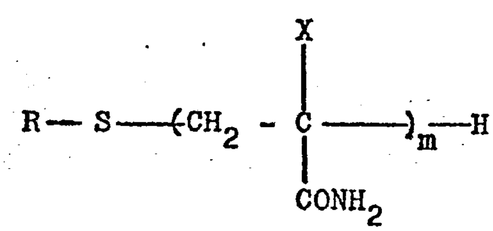 oder

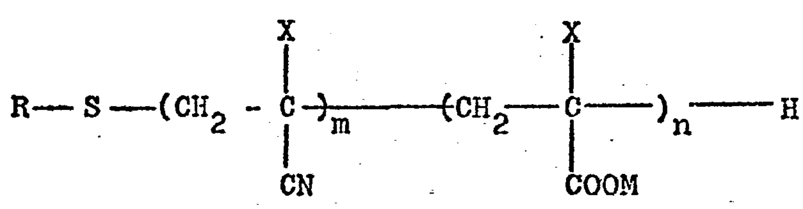

entspricht und R einen gegebenenfalls eine oder mehrere Carboxylgruppen und/oder Hydroxylgruppen enthaltenden aliphatischen Rest mit 2 bi 22 Kohlenstoffatomen darstellt und X = H oder Methyl und M ein Alkalimetallion und n und m ganze Zahlen sind in einer Größenordnung, so daß die Randbedingungen gemäß Anspruch 2 erfüllt werden, und wobei die Nitrilgruppe auch teilweise zur Amidgruppe verseift sein kann.

Europäisches Patentamt

# EUROPÄISCHER RECHERCHENBERICHT

Nummer der Anmeldung

0000337

EP 78 70 0185

## EINSCHLÄGIGE DOKUMENTE

| Kategorie | Kennzeichnung des Dokuments mit Angabe, soweit erforderlich, der maßgeblichen Teile | betrifft Anspruch |
| --- | --- | --- |
| A | US - A - 3 787 488 (G.L.GREENFIELD) | |
| A | FR - A - 1 552 899 (DOW) | |
| A | DE - A - 2 027 276 (MOSKOWSKIJ etc.) | |
| | ---- | |

**KLASSIFIKATION DER ANMELDUNG (Int.Cl.²)**

C 02 B 5/06
C 23 F 11/16

**RECHERCHIERTE SACHGEBIETE (Int. Cl.²)**

C 02 B 5/06
C 02 B 5/00
C 23 F 11/16
C 23 F 11/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
| --- | --- | --- |
| Den Haag | 29-08-1978 | VAN AKOLEYEN |